# EUROPEAN PATENT APPLICATION

(11) **EP 2 528 137 A1**
(43) Date of publication of application: **28.11.2012**
(21) Application number: 12004025.8
(22) Date of filing: 23.05.2012
(51) Int. Cl.: H01M 2/10, H01M 10/50

(54) **Power source apparatus to supply electric power and vehicle equipped with the power source apparatus**

(30) Priority: 25.05.2011 JP 2011117416
(71) Applicant: Sanyo Electric Co., Ltd., Osaka 570-8677 (JP)
(72) Inventor: Okada, Wataru, Moriguchi-shi Osaka 570-8677 (JP); Saito, Masao, Moriguchi-shi Osaka 570-8677 (JP)
(74) Representative: Hertz, Oliver

(57) **Abstract**

The power source apparatus to supply electric power is provided with a battery block 3 having a plurality of rectangular batteries 1 disposed in a stacked configuration with conducting external cases 11 insulated by insulating layers 2, a cooling plate 4 disposed at the bottom of the battery block 3 in a manner that thermally couples with each rectangular battery 1 and forcibly cools each battery 1 from its bottom surface, and a cooling mechanism 5 that cools the cooling plate 4. The insulating layers 2 are formed as a unit with each external case 11 and have a fit-together structure that enables stacking in fixed positions. Each rectangular battery 1 and insulating layers 2 form a single-piece battery module 10, and a battery block 3 is made up of a plurality of stacked battery modules 10.

## Description

### BACKGROUND OF THE INVENTION

### 1. Field of the Invention

The present invention relates to a power source apparatus to supply electric power that is used as a power source for an electric motor that drives a vehicle such as a hybrid vehicle (HV, hybrid electric vehicle, HEV, hybrid car), a fuel cell vehicle (FCV, fuel cell electric vehicle, FCEV, fuel cell car), or an electric vehicle (EV, electric automobile, electric car), or is used to store solar cell (solar battery) electric power, and to a vehicle equipped with that power source apparatus.

### 2. Description of the Related Art

High power output is required from a power source apparatus that powers a motor to drive a vehicle, is charged by solar cells to supply power at night, or supplies power during daytime periods of high power demand. The power source apparatus has a plurality of batteries connected in series to increase output voltage. For these types of applications, a power source apparatus has been developed that has a plurality of rectangular batteries stacked together and configured with adjacent batteries connected in series to increase the output voltage.

Refer to Japanese Laid-Open Patent Publication 2010-153141.

The power source apparatus cited in JP 2010-153141 has a plurality of rectangular batteries with insulating separators disposed between the batteries. The insulating separators insulate adjacent rectangular batteries that are stacked together. A configuration that stacks a plurality of (series-connected) rectangular batteries in a battery block generates potential difference between the external cases of adjacent rectangular batteries. Accordingly, it is necessary to insulate adjacent rectangular batteries when they are stacked together. To insulate adjacent rectangular batteries, insulating separators formed from insulating material such as plastic are disposed between the batteries. Specifically, a battery block is made by alternately stacking rectangular batteries and insulating separators. This battery block structure requires the rectangular batteries and insulating separators to be disposed in fixed positions and held together in a stacked assembly. If the relative position between rectangular batteries and insulating separators shifts and the external cases of adjacent batteries touch, high short circuit current will flow that damages the batteries and prevents safe operation. Consequently, it is necessary to accurately dispose the insulating separators between rectangular batteries in a manner that will not shift position. As a result, this system has the drawbacks that stacking many rectangular batteries together to assemble a battery block is troublesome, the number of component parts is large, and assembly cost is high. Furthermore, when used over a long period, effects such as vibration can shift the relative position of rectangular batteries and insulating separators to generate high short circuit current flow through the batteries.

The present invention was developed with the object of correcting the drawbacks described above. Thus, it is a primary object of the present invention to provide a power source apparatus to supply electric power and vehicle equipped with the power source apparatus that can attain a high margin of safety while reducing assembly cost.

### SUMMARY OF THE INVENTION

The power source apparatus to supply electric power of the present invention is provided with a battery block 3 having a plurality of rectangular batteries 1 disposed in a stacked configuration with conducting external cases 11 insulated by insulating layers 2, 42, 52, 62, a cooling plate 4 disposed at the bottom of the battery block 3 in a manner that thermally couples with each rectangular battery 1 and forcibly cools each battery 1 from its bottom surface, and a cooling mechanism 5 that cools the cooling plate 4. The insulating layers 2, 42, 52, 62 are formed as a unit with each external case 11 and have a fit-together structure that enables the batteries 1 to be stacked in fixed positions. Each rectangular battery 1 is configured with insulating layers 2, 42, 52, 62 as a single-piece battery module 10, and a plurality of battery modules 10 are stacked to make a battery block 3.

The power source apparatus described above attains a high safety margin while reducing assembly cost. This is because each rectangular battery is formed in single-piece construction with insulating layers to establish a battery module, and the insulating layers that have a fit-together structure. Therefore, even though prior-art insulating separators are not used, adjacent rectangular batteries can be reliably insulated, and shift in the relative position between batteries can be prevented.

In the power source apparatus to supply electric power of the present invention, the insulating layers 2, 42, 52, 62 can be formed to cover at least the primary surfaces 1 B of each external case 11. In this patent application, the primary surfaces 1 B of the external case 11 indicate the surfaces that face each other when the rectangular batteries are stacked together. Since the power source apparatus described above has the primary surfaces of the external cases covered by insulating layers, stacked rectangular batteries can be reliably insulated from one another. Further, since the primary surfaces of each rectangular battery are covered by insulating layers, even if condensation forms on the battery, that condensation can be restrained from propagating to the electrode terminals established on the upper surface of the battery.

In the power source apparatus to supply electric power of the present invention, a rectangular battery 1 can be insertion molded in the insulating layers 2, 42, 52, 62 to form a battery module 10, which is a single-piece structure that includes the rectangular battery 1 and the insulating layers 2, 42, 52, 62. In this power source apparatus, insulating layers can be simply and easily formed on rectangular battery surfaces to reliably insulate adjacent batteries.

In the power source apparatus to supply electric power of the present invention, the plurality of battery modules 10 stacked together in a battery block 3 can be sandwiched in the stacking direction by endplates 7 at each end, and the battery modules 10 can be held in the stack by fastening components 8 that connect the two endplates 7. In this power source apparatus, the battery modules in the battery block, which is held together by fastening components connected to the endplates at both ends, can be placed on the cooling plate and the battery modules can be reliably held in thermal connection with the cooling plate.

In the power source apparatus to supply electric power of the present invention, the battery modules 10 and endplates 7 can have a fit-together structure that allows them to be stacked together in fixed positions. In this power source apparatus, the battery modules and endplates can be reliably held together without shifting position.

In the power source apparatus to supply electric power of the present invention, the insulating layers 2, 42, 52, 62 of the battery modules 10 can be made thicker in center regions than in periphery regions. With the battery modules in a stacked configuration, insulating layer surfaces at the center regions of adjacent battery modules make contact and prevent strong forces from pressing against the perimeter regions of the rectangular batteries. This prevents detrimental effects such as deformation of rectangular battery perimeter regions.

In the power source apparatus to supply electric power of the present invention, thermally conducting sheet 6 that distorts with compression can be disposed between the battery block 3 and the cooling plate 4. In this power source apparatus, each rectangular battery can be stably and reliably joined to the cooling plate in a thermally coupled manner via the thermally conducting sheet. This allows each rectangular battery to be reliably cooled without developing temperature differentials between batteries.

In the power source apparatus to supply electric power of the present invention, the bottom surface of the insulating layers 2, 42, 52, 62 of each battery module 10, which is the surface opposite the cooling plate 4, can have an open region 22 that exposes the external case 11. The thermally conducting sheet 6, which is made of electrically insulating material, can be disposed in the open regions 22 to join each external case 11 with the cooling plate 4 in a thermally coupled manner via the thermally conducting sheet 6. In this power source apparatus, the thermally conducting sheet can be disposed in a fixed location without position shift with respect to the insulating layers to reliably join and thermally couple the bottom surface of each rectangular battery external case with the cooling plate. This allows the cooling plate to cool each rectangular battery in a stable manner without developing temperature differentials between batteries.

In the power source apparatus to supply electric power of the present invention, battery module 10 insulating layers 2, 42, 52, 62 on the bottom surface 1A of each external case 11 can have cover regions 23 that cover both ends of the bottom surface 1A, and the open region 22 can be established between those cover regions 23. Further, the interfaces 24 between the cover regions 23 and the open region 22 can be inclined in a manner that increases the open region 22 area in the direction from the bottom surfaces 1A of the rectangular batteries 1 towards the cooling plate 4. In this power source apparatus, thermally conducting sheet inserted in the open regions of the insulating layers is sandwiched between the cooling plate and the bottom surfaces of the rectangular batteries. Consequently, each rectangular battery spreads the thermally conducting sheet to tightly contact and thermally couple with an even wider area of the cooling plate for efficient battery cooling that reduces temperature differentials between batteries.

The power source apparatus to supply electric power of the present invention can be an apparatus that supplies power to a motor that drives a vehicle. This power source apparatus can be used in a configuration that increases output to deliver high power to a motor while reliably holding many rectangular batteries in fixed positions as battery modules. In particular, many rectangular batteries can be held in fixed positions over a long period, and position shift can be prevented between the rectangular batteries and insulating layers due to vehicle vibration. This achieves the characteristic of enabling safe operation.

The power source apparatus to supply electric power of the present invention can be an apparatus that is charged by solar cells to store solar cell generated power. This power source apparatus can be used in a configuration that increases output and allows charging by high output solar cells while reliably holding many rectangular batteries in fixed positions as battery modules. This achieves the characteristic of allowing operation over a long period with many rectangular batteries held stably in fixed positions.

The vehicle of the present invention can be equipped with any of the power source apparatus described above. The above and further objects of the present invention as well as the features thereof will become more apparent from the following detailed description to be made in conjunction with the accompanying drawings.

### BRIEF DESCRIPTION OF THE DRAWINGS

Fig. 1 is an oblique view of a power source apparatus to supply electric power for the first embodiment of the present invention;
Fig. 2 is an exploded oblique view of the power source apparatus shown in Fig. 1;
Fig. 3 is an exploded oblique view from below and behind the power source apparatus shown in Fig. 1;
Fig. 4 is a horizontal cross-section view of the power source apparatus shown in Fig. 1;
Fig. 5 is a vertical cross-section in the lengthwise direction of the power source apparatus shown in Fig. 1;
Fig. 6 is a vertical cross-section laterally across the power source apparatus shown in Fig. 1 with an enlarged inset showing a region of interest;
Fig. 7 is an enlarged cross-section view of an important region of the power source apparatus shown in Fig. 4;
Fig. 8 is an enlarged cross-section view of an important region of the power source apparatus shown in Fig. 5;
Fig. 9 is an enlarged oblique view of a battery module;
Fig. 10 is an exploded cross-section view showing a fit-together structure for stacking a plurality of battery modules;
Fig. 11 is an exploded cross-section view showing another example of a fit-together structure for stacking a plurality of battery modules;
Fig. 12 is an exploded cross-section view showing another example of a fit-together structure for stacking a plurality of battery modules;
Fig. 13 is an exploded oblique view showing another example of a fit-together structure for stacking a plurality of battery modules;
Fig. 14 is a block diagram showing a hybrid vehicle, which is driven by a motor and an engine, as an example of a vehicle equipped with a power source apparatus for an embodiment of the present invention;
Fig. 15 is a block diagram showing an electric vehicle, which is driven by a motor only, as an example of a vehicle equipped with a power source apparatus for an embodiment of the present invention; and
Fig. 16 is a block diagram showing an embodiment of the power source apparatus of the present invention used as a power storage apparatus.

### DETAILED DESCRIPTION OF THE EMBODIMENTS

The following describes embodiments of the present invention based on the figures. However, the following embodiments are merely specific examples of a power source apparatus to supply electric power and vehicle equipped with the power source apparatus representative of the technology associated with the present invention, and the power source apparatus and vehicle of the present invention are not limited to the embodiments described below. Further, to promote understanding of the scope of the claims, components shown in the embodiments of this patent application are named and labeled. However, components cited in the claims are in no way limited to the components described in the embodiments.

Primarily, the power source apparatus to supply electric power of the present invention is carried in an electric powered vehicle such as a hybrid vehicle or electric vehicle, and is used as the driving power source that supplies power to the driving motor of the vehicle. Or, the power source apparatus is used to store solar cell power and output power at night or during daytime peak-power usage times.

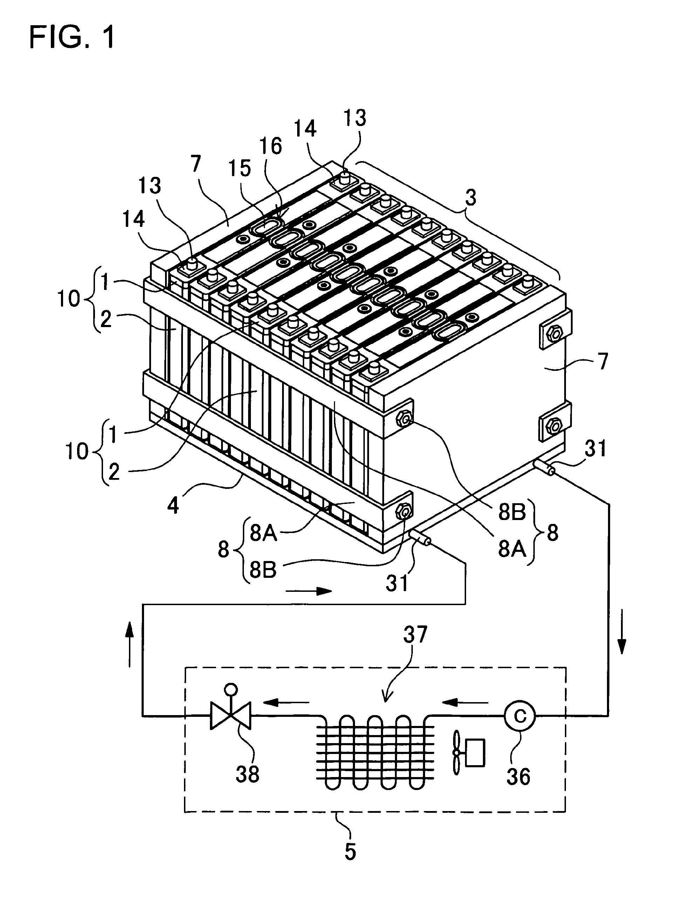

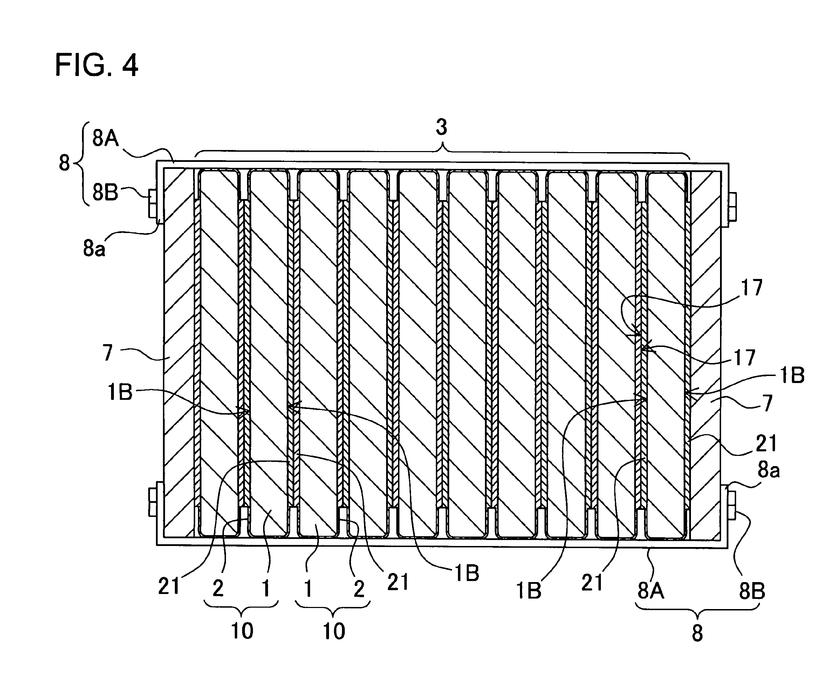

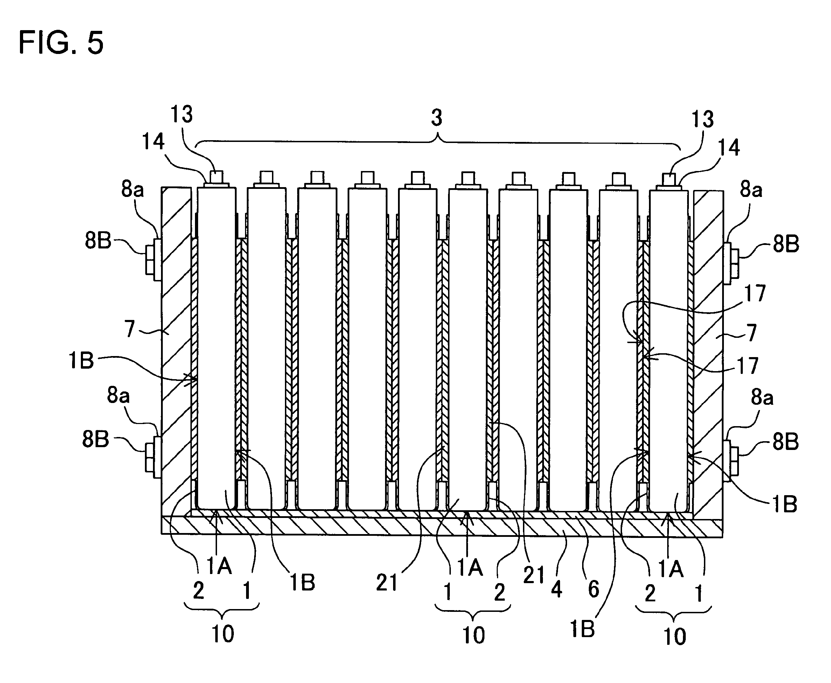

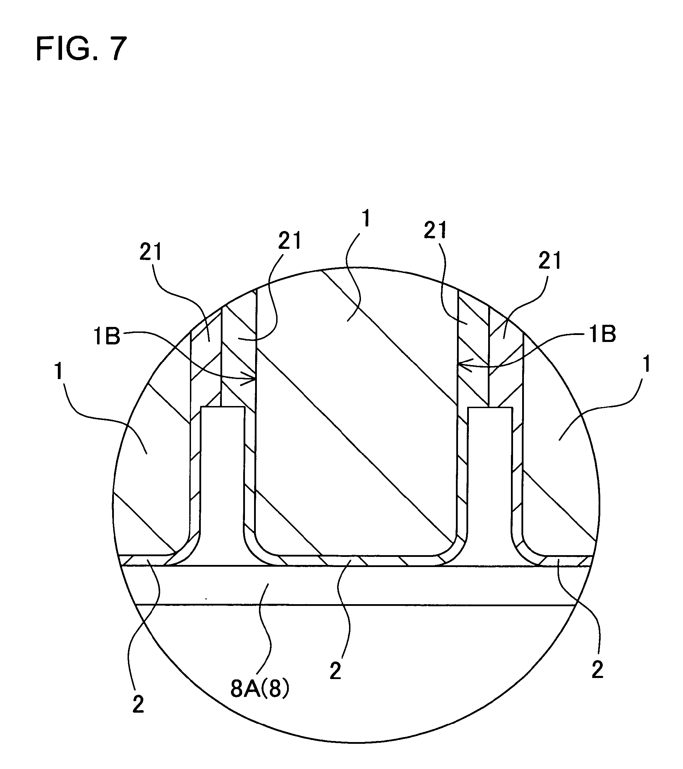

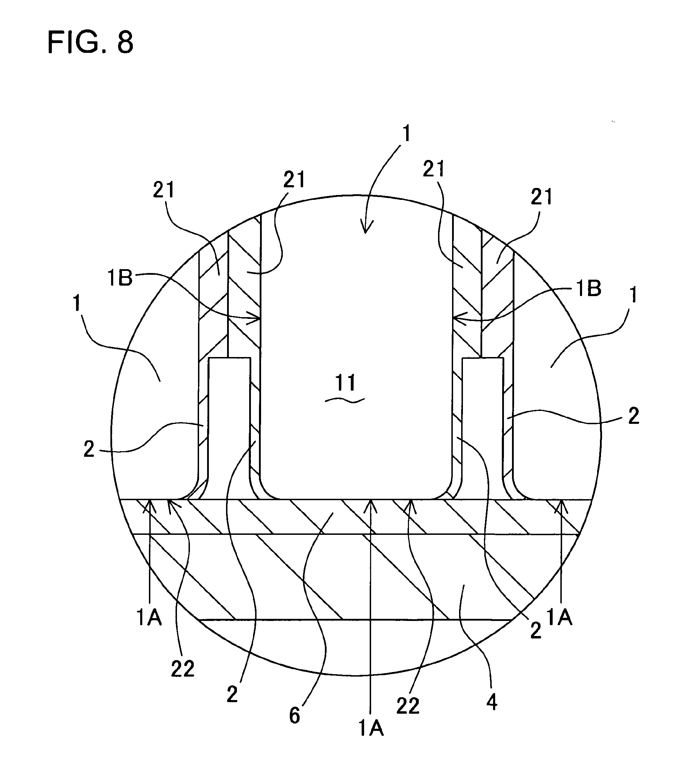

The power source apparatus shown in Figs. 1-8 is provided with a battery block 3 having a plurality of rectangular batteries 1 disposed in a stacked configuration with conducting external cases 11 insulated by insulating layers 2, a cooling plate 4 that cools the rectangular batteries 1 that make up the battery block 3 from the bottom surfaces 1A of the external cases 11, and a cooling mechanism 5 that cools the cooling plate 4. The cooling mechanism 5 of this power source apparatus circulates a coolant through the cooling plate 4 to cool the cooling plate 4. External cases 11 are joined to, and thermally coupled with the cooling plate 4 to forcibly cool the rectangular batteries 1. The cooling mechanism 5 detects rectangular battery 1 temperature to control cooling plate 4 temperature. When rectangular battery 1 temperature exceeds a set temperature, the cooling mechanism 5 circulates coolant through the cooling plate 4 to cool the rectangular batteries 1 via the cooling plate 4. When rectangular battery 1 temperature drops below the set temperature, the cooling mechanism 5 stops circulating coolant through the cooling plate 4.

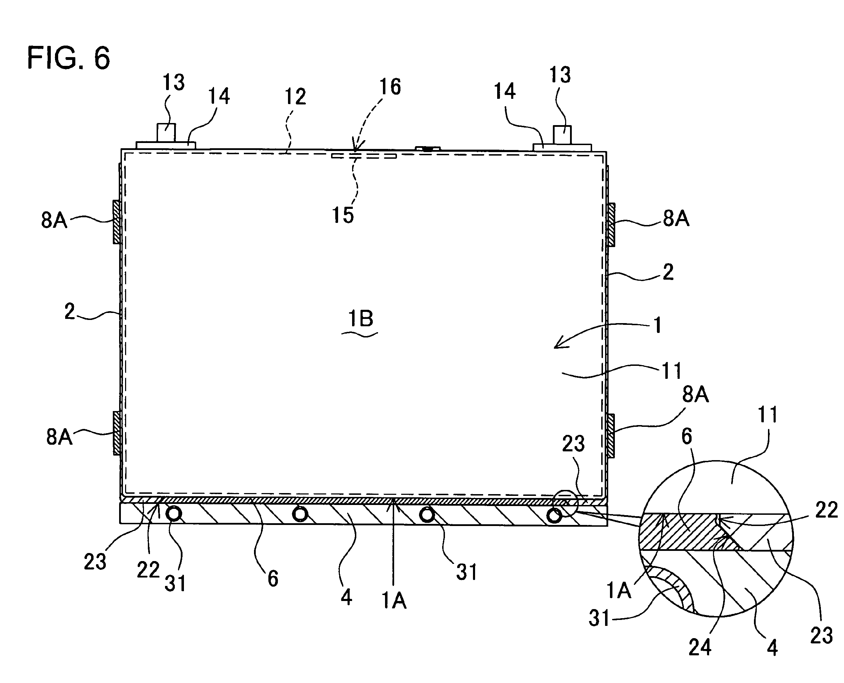

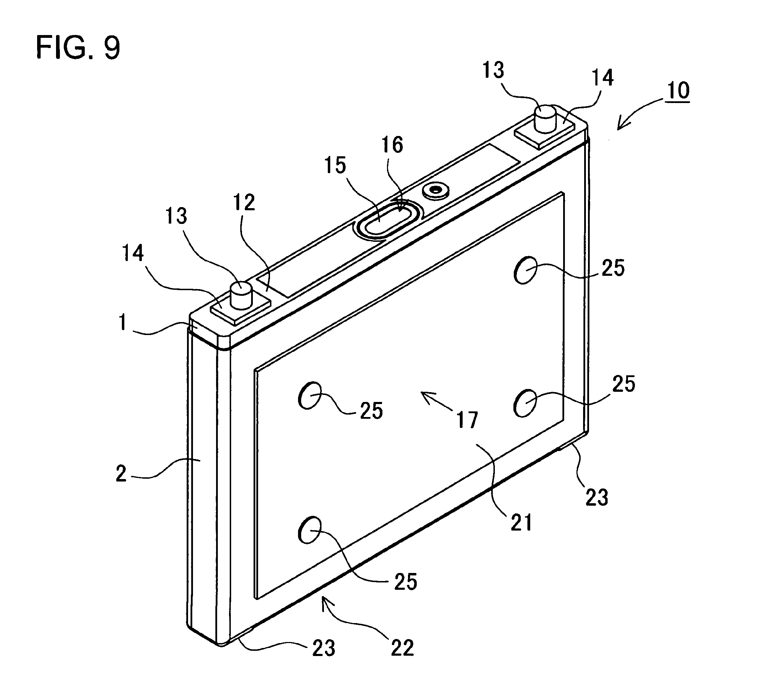

The rectangular batteries 1 are lithium ion rechargeable batteries. However, the rectangular batteries are not limited to lithium ion rechargeable batteries, and any batteries that can be charged, such as nickel hydride batteries, can also be used. Each rectangular battery has an electrode unit, which is a stack of positive and negative electrode plates (not illustrated), held in an external case 11 that is filled with electrolyte and sealed closed in an air-tight manner. As shown in Fig. 6, each external case 11 is formed in a rectangular cylindrical-shape with a closed bottom and the opening at the top is sealed closed in an air-tight manner by a sealing plate 12. The external case 11 I is formed by deep-drawing sheet-metal such as aluminum or aluminum alloy, and has conducting surfaces. Rectangular batteries 1 are formed in a thin rectangular-shape for stacking. The sealing plates 12 are also fabricated from sheet-metal such as aluminum or aluminum alloy. Each sealing plate 12 has positive and negative electrode terminals 13 mounted at its end regions via insulating material 14. The positive and negative electrode terminals 13 are connected to the internal positive and negative electrode plates (not illustrated). In a lithium ion rechargeable battery, the external case 11 is not connected to an electrode. Nevertheless, since the external case 11 is connected to the internal electrode plates via electrolyte, it attains an intermediate potential between that of the positive and negative electrode plates. However, one of the rectangular battery electrode terminals could also be connected to the external case via a lead-wire. In that type of rectangular battery, the electrode terminal connected to the external case could be mounted on the sealing plate without insulation. In addition, the sealing plate 12 is provided with a safety valve 15 opening 16. If pressure inside the external case 11 exceeds a set value, the safety valve 15 opens to prevent damage to the external case 11. If the safety valve 15 opens, internal gas is discharged to the outside through the opening 16 in the sealing plate 12. The rectangular battery 1 in Figs. 6 and 9 has a safety valve 15 opening 16 established in the sealing plate 12. This type of rectangular battery 1 can discharge gas through the opening 16 of an open safety valve 15. This is because gas accumulates inside the external case 11. The safety valve opening could also be established in a side or bottom of the rectangular battery. However, in that type of rectangular battery, electrolyte would be discharged when the safety valve opened. Electrolyte is a conducting liquid, and when it is discharged, it can short circuit materials that it comes in contact with. A rectangular battery 1 with the safety valve 15 established on the sealing plate 12 can reduce internal pressure by discharging gas from an open safety valve 15. Accordingly, when the safety valve 15 opens, electrolyte discharge is limited to reduce detrimental effects due to electrolyte seepage.

Although not illustrated, stacked rectangular batteries 1 have adjacent electrode terminals 13 connected in series or parallel. No potential difference develops between the external cases 11 of rectangular batteries 1 connected in parallel. However, a high output power source apparatus does not have all its rectangular batteries 1 connected in parallel, and series-connection is used to increase the output voltage. Potential difference develops between adjacent rectangular batteries 1 when they are connected in series. Accordingly, the power source apparatus has rectangular batteries 1 stacked in an electrically insulated manner with insulating layers 2 sandwiched between adjacent batteries 1. Further, the insulating layers 2 between the stacked rectangular batteries 1 thermally isolate adjacent batteries 1. Consequently, even if the temperature of a rectangular battery 1 becomes abnormally high in a thermal runaway condition, the insulating layers 2 act to prevent thermal runaway from spreading to adjacent batteries 1. Therefore, even in a battery block with insulating layers disposed between parallel-connected rectangular batteries, thermal runaway can be prevented and safety improved.

Further, lead-wires (not illustrated) are connected to the electrode terminals 13 of each rectangular battery 1. The lead-wires are connected to a circuit board (not illustrated) carrying protection circuitry that detects rectangular battery 1 voltage. Although not illustrated, the circuit board is disposed on top of the power source apparatus shown in Fig. 1.

The battery block 3 has insulating layers 2 disposed between adjacent rectangular batteries 1. The insulating layers 2 cover at least the opposing surfaces of adjacent rectangular batteries 1, which are essentially the entire primary surfaces 1 B of each external case 11. In addition to electrically insulating the external cases 11 of adjacent rectangular batteries 1, the insulating layers 2 also cut-off heat transfer between adjacent batteries 1. Accordingly, the insulating layers 2 are made by molding plastic. However, the insulating layers can also be made by forming insulating material such as rubber instead of plastic.

The insulating layers 2 are formed by insertion molding the rectangular battery 1 to form a battery module 10, which is the rectangular battery 1 and insulating layers 2 formed as a single-piece structure. A battery module 10 is formed by placing a rectangular battery 1 in the insulating layer 2 mold cavity and injection molding plastic into the mold. As shown in Figs. 6-9, the insulating layers 2 are formed (laterally) around the entire rectangular battery 1 and covering both ends of the bottom surface 1A. The entire upper surface of the battery 1 and the bottom surface 1A excluding the end regions are left exposed.

Although not illustrated, the insulating layers can also be a molded elastic structure formed from flexible material such as soft plastic or rubber in a shape that conforms to the outline of a rectangular battery. This molded elastic structure can be attached to the outer surfaces of the rectangular battery. For example, the molded elastic structure can be stretched open and a rectangular battery can be inserted inside tightly attaching the insulating layers in a flexible manner to cover the surfaces of the external case. In this manner, the insulating layers and external case can form a single-unit, and the rectangular battery and insulating layers can make up a battery module that has a single-piece configuration. These insulating layers can also cover the entire rectangular battery (lateral) periphery and both ends of the bottom surface leaving the upper surface and the bottom surface excluding the end regions exposed.

The insulating layers 2 of Figs. 6 and 9 leave the upper surface exposed where the rectangular battery 1 electrode terminals 13 are established. A rectangular battery 1 has electrode terminals 13 and a safety valve 15 opening 16 provided on its upper surface sealing plate 12. A battery module 10 that exposes the sealing plate 12 surface makes it easy to connect the electrode terminals 13. In addition, since the safety valve 15 opening 16 is not closed-off by an insulating layer, component parts such as a battery exhaust duct (not illustrated) can be connected to the safety valve 15 opening 16.

The insulating layers 2 are provided with thick sections 21 that cover the center regions of the battery module 10 stacking surfaces 17 and are formed thicker than insulating layers in the perimeter regions of the stacking surfaces 17. When battery modules 10 with these insulating layers 2 are stacked with their stacking surfaces 17 in tight contact, insulating layer 2 thick sections 21 at center regions of the stacking surfaces 17 make surface contact and prevent strong forces from being applied at regions around the perimeters of the rectangular batteries 1.

The battery modules 10, which are rectangular batteries 1 and insulating layers 2 formed in single-piece construction, are shaped to stack in fixed positions via insulating layers 2 that have a fit-together structure. The fit-together structure of the insulating layers 2 has mating projections 25 and cavities 26 established facing each other on opposing stacking surfaces 17 of adjacently stacked battery modules 10. In this fit-together structure, projections 25 on a stacking surface 17 insert into opposing cavities 26 to connect battery modules 10. However, the fit-together structure could also be provided with insertion holes instead of cavities to accept the projections.

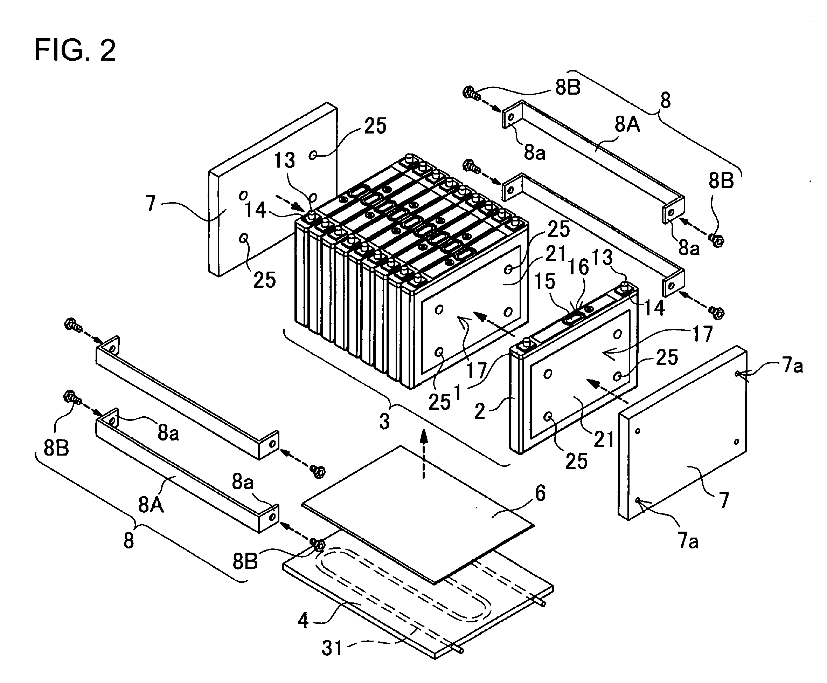

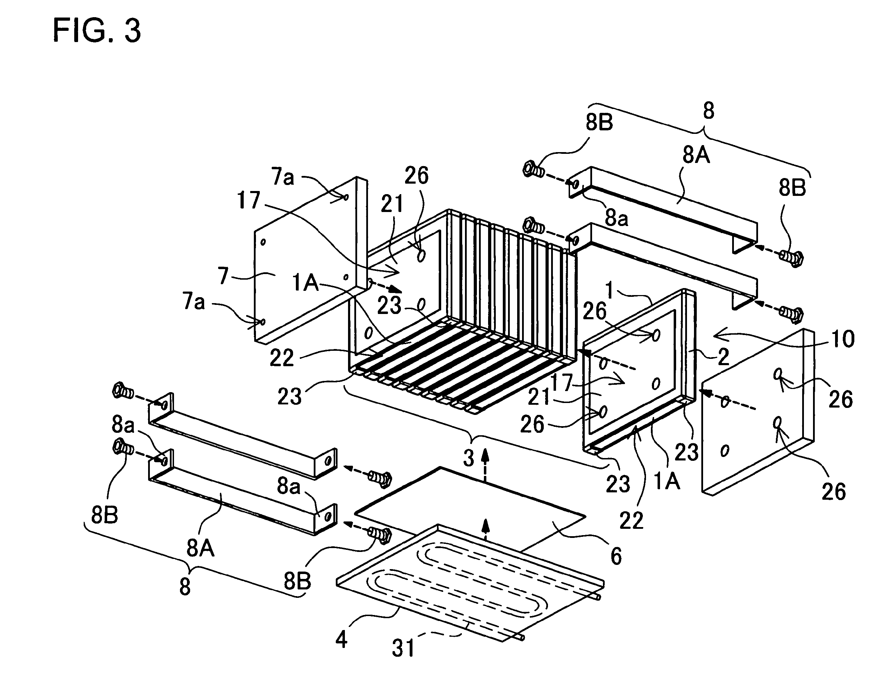

Insulating layers 2 of the battery modules 10 shown in Figs. 2 and 3 are provided with projections 25 on the stacking surfaces 17 on one side and cavities 26 that accept projection 25 insertion on the stacking surfaces 17 on the other side. Namely, insulating layers 2 of adjacently stacked battery modules 10 in Figs. 2 and 3 have projections 25 established on one side of the facing stacking surfaces 17 and cavities 26 that accept projection 25 insertion established on the other side. The insulating layers 2 of the figures have a plurality of projections 25 established on stacking surfaces 17 on one side and a plurality of cavities 26 that accept projection 25 insertion established on opposing stacking surfaces 17. This allows the position and orientation of the stacked battery modules 10 to be fixed. The insulating layers 2 of the figures have projections 25 and cavities 26 established in the four corner regions of the thick sections 21 of opposing stacking surfaces 17.

The insulating layers 2 shown in the figures have projections 25 with circular shapes and cavities 26 with circular shaped interiors that conform to the outlines of the projections 25 and accept their insertion. The shape of the inside of the cavities 26 is approximately equal to, or slightly larger than the outside shape of the projections 25. This enables the projections 25 and cavities 26 to fit-together and connect. A fit-together structure that aligns circular projections 25 into cavities 26 allows battery modules 10 to be stacked in fixed positions with given orientation by establishing a plurality of projections 25 and cavities 26 on the stacking surfaces 17. However, the projections and cavities do not necessarily have to have circular shapes, and they could also have polygonal shapes. Specifically, the projections can have polygonal shapes, and the interiors of the cavities can have polygonal shapes that conform to the outside shapes of the projections. In a fit-together structure that aligns polygonal projections into polygonal cavities, battery modules can be stacked in fixed positions with given orientation by establishing one, or a plurality of polygonal projections and cavities in the stacking surfaces. In addition, the insulating layer fit-together structure could also be made up of projections that are projecting rails and cavities that are grooves that accept insertion of the projecting rails. This type of fit-together structure also allows battery modules to be stacked together in fixed positions with given orientation.

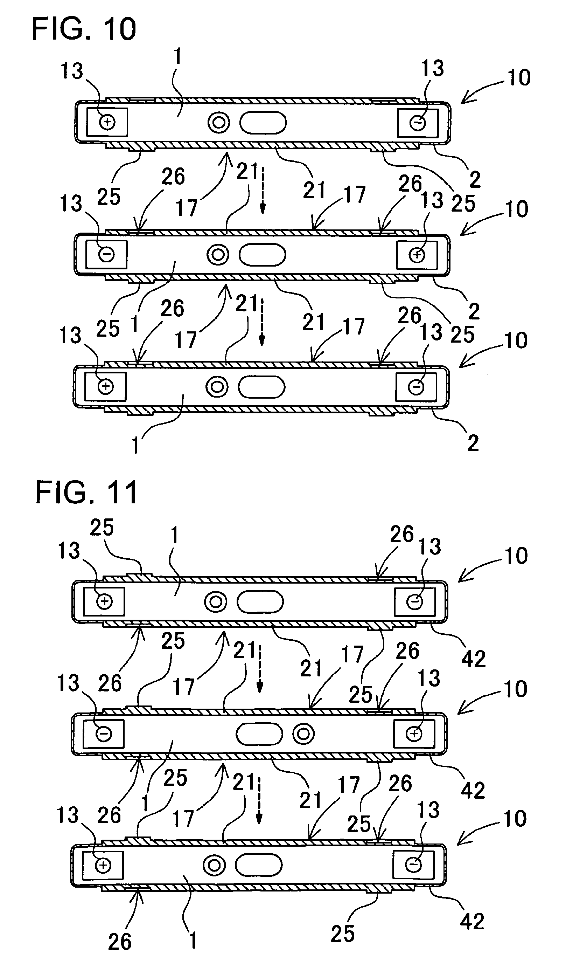

As shown in Fig. 10, the fit-together structure described above fits projections 25 established on the stacking surface 17 of one battery module 10 into cavities 26 established in the opposing stacking surface 17 of an adjacent battery module 10 to align and stack a plurality of battery modules 10 in fixed positions. Also as shown in Fig. 10, the battery modules 10 are stacked for series-connection of adjacent rectangular battery cells 1. To achieve this, adjacent electrode terminals 13 have opposite polarities as a result of stacking the battery modules 10 with alternate rectangular battery cells 1 flipped from left to right (rotated 180° around a vertical axis). Accordingly, the disposition of insulating layer 2 projections 25 and cavities 26 with respect to rectangular battery cell 1 positive and negative electrode terminals 13 for the battery module 10 in the center of Fig. 10 is reversed in comparison with the upper and lower battery modules 10 in Fig. 10.

The insulating layer fit-together structure can also have the configuration shown in Fig. 11. The fit-together structure shown in Fig. 11 has both projections 25 and cavities 26 established at the sides of one stacking surface 17, and has cavities 26 and projections 25 established in corresponding positions at the sides of another stacking surface 17 that stacks together with that stacking surface 17. In this fit-together structure as well, projections 25 insert into corresponding cavities 26 to fit the battery modules 10 together. The projections 25 and cavities 26 established on opposing insulating layer 42 stacking surfaces 17 of the battery modules 10 shown in Fig. 11 are disposed with 180° (2-fold) rotational symmetry (around a vertical axis). To connect adjacent battery modules 10 in series, every other battery module 10 is flipped from left to right (rotated 180° around a vertical axis) to reverse electrode terminal 13 polarity. However, with this fit-together structure, opposing projections 25 and cavities 26 can have the same arrangement on the stacking surfaces 17 even for a series stacking configuration. Consequently, all battery modules can be fabricated with the same structure, and alternate battery modules can be flipped from left to right to stack a plurality of rectangular battery cells 1 with series-connection.

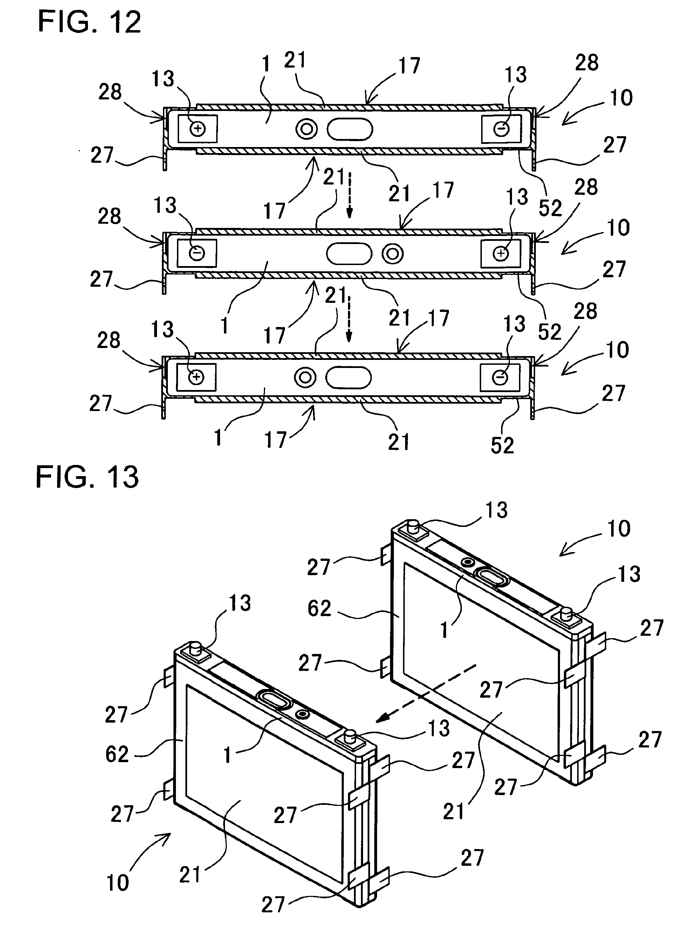

The insulating layer fit-together structure is not limited to configurations with projections and cavities as described above. For example, as shown in Fig. 12, alignment tabs 27 can be provided at both sides of the insulating layers 52 and adjacent battery modules 10 can be aligned inside those alignment tabs 27. The insulating layers 52 shown in Fig. 12 are provided with alignment tabs 27 located on both (narrow) sides of a battery module 10, projecting in the battery module 10 stacking direction, and formed as a single-piece structure with the battery module 10. The alignment tabs 27 of the insulating layers 52 shown in the figure project (downward) in one direction to align adjacent battery modules 10 between the alignment tabs 27 on both sides and prevent lateral position shift of stacked battery modules 10. In addition, the insulating layers 52 shown in the figure are provided with alignment slots 28 in positions corresponding to alignment tab 27 locations to accept alignment tab 27 insertion. This enables alignment tabs 27 of adjacent battery modules 10 to connect in fixed positions. Alignment tabs 27 on the left and right sides of the battery modules 10 insert into the alignment slots 28 and prevent vertical position shift of stacked battery modules 10. Further, for series-connection of the stacked battery modules 10, the rectangular battery cell 1 of every other battery module 10 in Fig. 12 is flipped from left to right (rotated 180° around a vertical axis) to reverse the polarity of adjacent battery module 10 electrode terminals 13. Accordingly, the disposition of insulating layer 52 alignment tabs 27 and alignment slots 28 with respect to rectangular battery cell 1 positive and negative electrode terminals 13 for the battery module 10 in the center of Fig. 12 is reversed in comparison with the upper and lower battery modules 10 in Fig. 12.

Insulating layer alignment tabs can also be configured as shown in Fig. 13. The insulating layers 62 shown in Fig. 13 are provided with pairs of oppositely projecting alignment tabs 27 disposed at the top and bottom of each narrow side of a battery module 10. Further, those alignment tabs 27 are disposed on the narrow sides of the battery module 10 with 180° rotational symmetry (around a vertical axis). With this arrangement, each alignment tab 27 at the top and bottom of a narrow side of a stacked battery module 10 interconnects with an alignment tab 27 of an adjacent battery module 10 to prevent vertical position shift. In addition, battery modules 10 are aligned between alignment tabs 27 projecting in the same direction on both narrow sides to prevent lateral position shift. Further, to connect stacked battery modules 10 is series, alternate rectangular battery cells 1 are flipped from left to right (rotated 180° around a vertical axis) to reverse electrode terminal 13 polarity. However, because of rotational symmetry, series-connection can be made with adjacent battery modules 10 that have the same alignment tab 27 arrangement on their narrow sides. Consequently, all battery modules can be fabricated with the same structure, and alternate battery modules can be flipped from left to right to stack a plurality of rectangular battery cells 1 with series-connection.

Note, the insulating layer fit-together structure of the power source apparatus of the present invention is not limited to the structures described above. Accordingly, the insulating layer fit-together structure can be any configuration that fits battery modules together in a stack without position shift between adjacent battery modules.

As shown in Figs. 3 and 6, the insulating layers 2 of each battery module 10 are provided with an open region 22 in the bottom surface, which is the surface opposite the cooling plate 4, to expose the external case 11. Electrically insulating thermally conducting sheet 6 is disposed in the open regions 22 to connect the external cases 11 to the cooling plate 4 in a thermally coupled manner. The insulating layers 2 of Figs. 3 and 6 have cover regions 23 that cover the end regions of each external case 11 bottom surface 1A, and the open regions 22 are established between those cover regions 23. The thickness of the cover regions 23 is the same as the thickness of the thermally conducting sheet 6, and both the cover regions 23 and the thermally conducting sheet 6 tightly attach to the surface of the cooling plate 4. With this structure, the thermally conducting sheet 6 is made thin when the cover regions 23 are thin, and the thermally conducting sheet 6 is made thick when the cover regions 23 are thick. By making the thermally conducting sheet 6 thin, rectangular batteries 1 can be more effectively cooled by the cooling plate 4. However, if the thermally conducting sheet is too thin, it becomes difficult to achieve sufficient strength and durability. Accordingly, thermally conducting sheet thickness is preferably set from 0.5mm to 1.5mm.

As shown in the enlarged inset of Fig. 6, interfaces 24 between cover regions 23 and open regions 22 are formed as inclined surfaces that incline in a manner that widens the open area when moving from the bottom surfaces 1A of the rectangular batteries 1 to the cooling plate 4. With this structure, thermally conducting sheet 6 disposed in the insulating layer 2 open regions 22 is sandwiched between rectangular battery 1 bottom surfaces 1A and the cooling plate 4, and the thermally conducting sheet 6, which distorts under pressure, can be tightly attached to the cooling plate 4 while being spread over the surface of the cooling plate 4. As a result, the thermally conducting sheet 6 can be tightly and reliably attached over a wider surface area of the cooling plate 4 to achieve better thermal coupling. Accordingly, each rectangular battery 1 can be efficiently cooled by the cooling plate 4 in a manner that reduces temperature differentials between batteries 1.

The thermally conducting sheet 6 is squeezed between battery block 3 rectangular batteries 1 and the cooling plate 4 and distorts to tightly contact the bottom surfaces 1A of the rectangular batteries 1 with the surface of the cooling plate 4. The surfaces of the thermally conducting sheet 6 can also be coated with electrically insulating thermal grease (thermal gel, thermal compound, thermal paste, heat paste, heat sink paste, heat transfer compound, heat transfer paste [HTP], heat sink compound) such as a silicone oil-based compound to tightly attach the bottom surfaces 1A of the rectangular batteries 1 with the surface of the cooling plate 4 in an even more stable and reliable manner. Although not illustrated, the open regions that expose rectangular battery bottom surfaces can also be filled with thermal grease to connect the bottom surfaces of the rectangular batteries in a thermally coupled manner with the cooling plate via the thermal grease. In this configuration, thermally conducting sheet does not necessarily have to be used, and the rectangular batteries can be thermally coupled to the surface of the cooling plate by thermal grease alone.

In the power source apparatus described above, the bottom surface 1A of each rectangular battery 1 can be stably and reliably connected to the cooling plate 4 in a thermally coupled manner via thermally conducting sheet 6 and/or thermal grease. Accordingly, each rectangular battery 1 can be efficiently cooled in a manner that reduces temperature differentials between batteries 1. However, the power source apparatus of the present invention can also be implemented by connecting insulating layer covered rectangular batteries in a thermally coupled manner to the surface of the cooling plate without exposing the bottom surfaces of the batteries.

As shown in Figs. 1-6, a plurality of battery modules 10 are stacked together with a pair of endplates 7 disposed at both ends of the stack, and the battery modules 10 are held in the stacked configuration by fastening components 8 that connect at both ends to the endplates 7.

The endplates 7 are made of hard plastic that is molded, or are made of a metal such as aluminum or aluminum alloy. The endplates 7 have the same rectangular outline as the battery modules 10 to hold the battery modules 10 over a wide area. The rectangular endplates 7 are made the same size as the battery modules 10 or are made slightly larger than the battery modules 10. In addition, the endplates 7 have a fit-together structure that interconnects with the stacking surfaces 17 of adjacent battery modules 10 to connect with the battery modules in a manner that does not shift position. This fit-together structure can be the same as the battery module 10 fit-together structure described previously. The endplates 7 shown in Figs. 2 and 3 are provided with cavities 26 in positions that accept insertion of projections 25 established on the stacking surface 17 of an opposing battery module 10, and are provided with projections 25 in positions that insert into cavities 26 established in the stacking surface 17 of another opposing battery module 10. In this power source apparatus, projections 25 and cavities 26 on the stacking surfaces 17 of the endplates 7 and battery modules 10 fit-together to hold the power source apparatus together without position shift. Although not illustrated, the battery modules and endplates can also have a fit-together structure employing alignment tabs. However, the endplates do not necessarily have to have the same fit-together structure as the battery modules, and the endplates can have any configuration that fits the endplates and battery modules together without position shift.

The end regions of fastening components 8, which are metal bands 8A, are connected to the endplates 7. The metal bands 8A are connected to the endplates via set-screws 8B. Endplates 7, which connect with metal bands 8A by set-screws 8B, are provided with screw-holes 7a that accept set-screw 8B insertion. The screw-holes 7a are established in the outer surfaces of the endplates 7, and set-screws 8B inserted through bent regions 8a at both ends of the metal bands 8A screw into the screw-holes 7a to connect the metal bands 8A. Although the metal bands 8A of the figures attach to the endplates 7 via set-screws 8B, the metal bands can also connect to the endplates by other attachment methods. For example, end regions of the metal bands can be bent inward for endplate attachment, or the end regions of the metal bands can be crimp-attached to the endplates.

The power source apparatus of Figs. 1-3 has metal bands 8A disposed along the upper ends of the battery modules 10 and metal bands 8A disposed along the bottom ends of the battery modules 10 to connect the endplates 7. Endplate 7 outside surfaces are provided with screw-holes 7a in the upper ends and bottom ends on both sides. This power source apparatus holds the tops and bottoms of the battery modules 10 with metal bands 8A. Although not illustrated, the power source apparatus can also dispose the metal bands in the central region above and below the center section. The endplates 7, which are held by set-screws 8B through the ends of the metal bands 8A, have the screw-holes 7a positioned at the metal band 8A attachment points.

The metal bands 8A are made from sheet-metal of a given thickness formed with a given width. The ends of the metal bands 8A connect to the endplates 7 to retain a plurality of battery modules 10 in a compressed state between the pair of endplates 7. The metal bands 8A fix the dimension between the pair of endplates 7 to hold stacked rectangular batteries 1 and insulating layers 2 between the endplates 7 in a given state of compression. If rectangular battery 1 expansion pressure stretches the metal bands 8A, battery 1 expansion cannot be prevented. Accordingly, the metal bands 8A are formed from sheet-metal strong enough to avoid stretching due to rectangular battery 1 expansion pressure, and are formed with a thickness and width that achieves sufficient strength. For example, the metal bands 8A are made of sheet-metal such as SUS304 stainless-steel sheet-metal or other steel sheet-metal. The metal bands can also be made by forming sheet-metal in a channel-shape (with a u-shaped cross-section). Since metal bands with this shape have good bending strength, they are characterized by the ability to solidly retain a stack of rectangular batteries in a given state of compression while making the metal bands narrower.

The ends of the metal bands 8A are provided with bent regions 8a, and the bent regions 8a connect to the endplates 7. The bent regions 8a are provided with through-holes for the set-screws 8B, and the metal bands 8A are attached to the endplates 7 via set-screws 8B inserted through the through-holes.

As shown in Figs. 1-3 and 6, the cooling plate 4 is provided with coolant passageways 31 that circulate coolant inside of the cooling plate 4. Coolant such as Freon (DuPont trade name for chlorofluorocarbons) or carbon dioxide is supplied to the coolant passageways 31 in liquid form, evaporates inside the coolant passageways 31, and cools the cooling plate 4 via the heat of vaporization. The coolant passageways 31 of the cooling plate 4 are connected to the cooling mechanism 5.

As shown in Fig. 1, the cooling mechanism 5 is provided with a compressor 36 that compresses coolant vaporized inside the coolant passageways 31, a heat exchanger 37 that cools and liquefies coolant compressed by the compressor 36, and an expansion valve 38 that supplies coolant liquefied by the heat exchanger 37 to the coolant passageways 31. Coolant is supplied from the expansion valve 38 in the liquid state, evaporates in the coolant passageways 31 inside the cooling plate 4 to cool the cooling plate 4 via the heat of vaporization, and is discharged to the cooling mechanism 5. Namely, the coolant circulates between the coolant passageways 31 in the cooling plate 4 and the cooling mechanism 5 to cool the cooling plate 4. Although this cooling mechanism 5 cools the cooling plate 4 to a low temperature via the coolant's heat of vaporization, the cooling plate can also be cooled without depending on the heat of vaporization. In such a system, coolant such as brine solution cooled to a low temperature is supplied to the coolant passageways to directly cool the cooling plate via the low temperature of the coolant rather than by the heat of vaporization.

The cooling mechanism 5 controls the state of cooling of the cooling plate 4 via temperature sensors (not illustrated) that detect rectangular battery 1 temperature. Specifically, when rectangular battery 1 temperature exceeds a preset initiate-cooling-temperature, coolant is supplied to cool the cooling plate 4. When rectangular battery 1 temperature drops below a cease-cooling-temperature, the supply of coolant to the cooling plate 4 is stopped. This controls rectangular battery 1 temperature within a preset temperature range.

The power source apparatus described above can be used as a power source on-board a vehicle. An electric powered vehicle such as a hybrid vehicle driven by both an engine and an electric motor, a plug-in hybrid vehicle, or an electric vehicle driven by an electric motor only can be equipped with the power source apparatus and use it as an on-board power source.

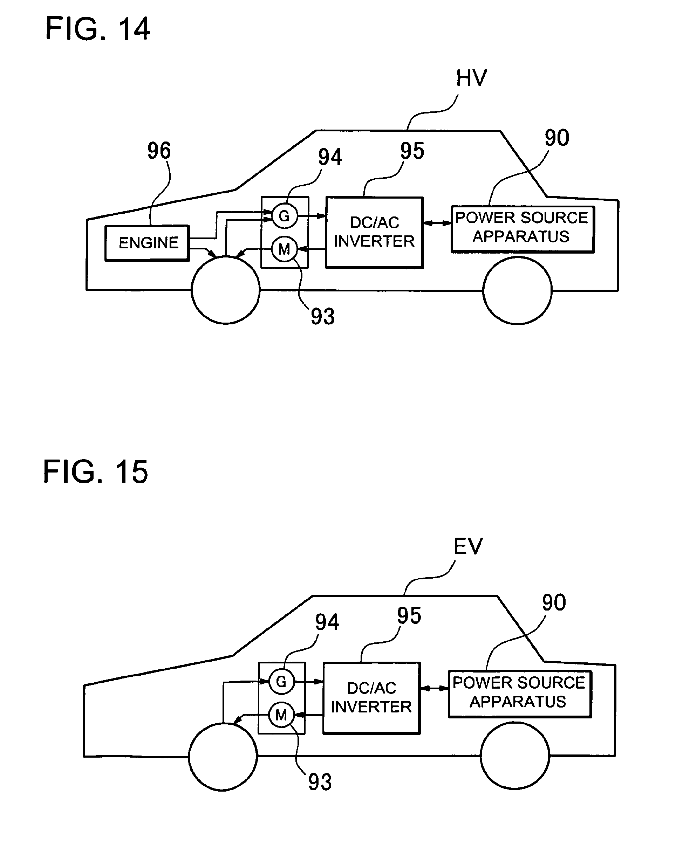

Fig. 14 shows an example of power source apparatus installation on-board a hybrid vehicle, which is driven by both an engine and an electric motor. The vehicle HV equipped with the power source apparatus 90 shown in this figure is provided with an engine 96 and a driving motor 93 to drive the vehicle HV, a power source apparatus 90 to supply power to the motor 93, and a generator 94 to charge the power source apparatus 90 batteries. The power source apparatus 90 is connected to the motor 93 and generator 94 via a DC/AC inverter 95. The vehicle HV runs on both the motor 93 and engine 96 while charging the batteries in the power source apparatus 90. In operating modes where engine efficiency is poor such as during acceleration and low speed cruise, the vehicle is driven by the motor 93. The motor 93 operates on power supplied from the power source apparatus 90. The generator 94 is driven by the engine 96 or by regenerative braking when the vehicle brake pedal is pressed and operates to charge the power source apparatus 90 batteries.

Fig. 15 shows an example of power source apparatus installation on-board an electric vehicle, which is driven by an electric motor only. The vehicle EV equipped with the power source apparatus 90 shown in this figure is provided with a driving motor 93 to drive the vehicle EV, a power source apparatus 90 to supply power to the motor 93, and a generator 94 to charge the power source apparatus 90 batteries. The power source apparatus 90 is connected to the motor 93 and generator 94 via a DC/AC inverter 95. The motor 93 operates on power supplied from the power source apparatus 90. The generator 94 is driven by energy from regenerative braking and operates to charge the power source apparatus 90 batteries.

Further, application of the power source apparatus of the present invention is not limited to the power source for the driving motor in a vehicle. The power source apparatus of the present invention can also be used as the power source in a power storage apparatus that stores power by charging batteries with power generated by methods such as solar power or wind power generation. Or, the power source apparatus can be used as the power source in a power storage apparatus that stores power by charging batteries with late-night (reduced-rate) power. A power source apparatus charged by late-night power is charged by surplus power generated by the power plant late at night, and outputs power during the daytime when demand is high. This allows daytime peak-power usage to be limited. The power source apparatus can also be used as a power source that is charged by both solar cell output and late-night power. This type of power source apparatus effectively uses both late-night power and power generated by solar cells, and can take weather conditions and power consumption patterns into consideration to efficiently store power.

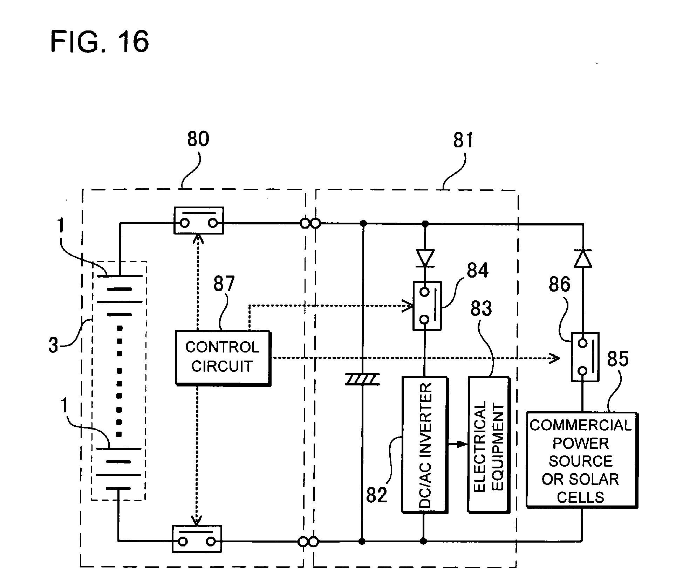

The power storage apparatus shown in Fig. 16 charges power source apparatus 80 batteries with a charging power supply 85 such as a (late-night) commercial power source or solar cells, and discharges power source apparatus 80 batteries to supply power to a load 81 that is a DC/AC inverter 82. Accordingly, the power storage apparatus of the figure has a charging mode and a discharging mode. The charging power supply 85 is connected to the power source apparatus 80 via a charging switch 86, and the DC/AC inverter 82 is connected to the power source apparatus 80 via a discharge switch 84. The discharge switch 84 and the charging switch 86 are controlled ON and OFF by the power source apparatus 80 control circuit 87. In the charging mode, the control circuit 87 switches the charging switch 86 ON and the discharge switch 84 OFF to charge the power source apparatus 80 batteries with power supplied from the charging power supply 85. When power source apparatus 80 charging is completed by fully-charging the batteries or by charging to a battery capacity at or above a given capacity, the control circuit 87 switches the charging switch 86 OFF to stop charging. In the discharging mode, the control circuit 87 switches the discharge switch 84 ON and the charging switch 86 OFF to supply power from the power source apparatus 80 to the load 81. The load 81 that is supplied with power from the power source apparatus 80 delivers that power to electrical equipment 83 via the DC/AC inverter 82. When power source apparatus 80 remaining battery capacity drops to a given capacity, the control circuit 87 switches the discharge switch 84 OFF to stop battery discharge. Further, depending on requirements, the power storage apparatus can also turn ON both the charging switch 86 and the discharge switch 84 to allow power to be simultaneously supplied to the load 81 while charging the power source apparatus 80.

The type of power storage apparatus described above can be used advantageously in applications such as a back-up power source that can be installed in a server computer rack, a back-up power source in a wireless base station such as mobile phone base station, the power source in a power storage system for use in the home or manufacturing facility, a streetlight power source, and a power source for traffic signals or other roadside indicators etc. It should be apparent to those with an ordinary skill in the art that while various preferred embodiments of the invention have been shown and described, it is contemplated that the invention is not limited to the particular embodiments disclosed, which are deemed to be merely illustrative of the inventive concepts and should not be interpreted as limiting the scope of the invention, and which are suitable for all modifications and changes falling within the spirit and scope of the invention as defined in the appended claims.

## Claims

1. A power source apparatus to supply electric power comprising:
a battery block (3) having a plurality of rectangular batteries (1) provided with conducting external cases (11) disposed in a stack insulated by insulating layers (2, 42, 52, 62);
a cooling plate (4) disposed at the bottom of the battery block (3) in a manner that thermally couples with each rectangular battery (1) and forcibly cools each battery (1) from its bottom surface; and
a cooling mechanism (5) that cools the cooling plate (4),
**characterized in that**
the insulating layers (2, 42, 52, 62) are formed as a unit with each external case (11) and have a fit-together structure that enables stacking in fixed positions, and
each rectangular battery (1) and insulating layers (2, 42, 52, 62) form a single-piece battery module (10), and a battery block (3) is made up of a plurality of stacked battery modules (10).

2. The power source apparatus to supply electric power as cited in claim 1 wherein the insulating layers (2, 42, 52, 62) are configured to cover at least the primary surfaces (1B) of each external case (11).

3. The power source apparatus to supply electric power as cited in either claim 1 or claim 2 wherein each rectangular battery (1) is insertion molded in the insulating layers (2, 42, 52, 62) to form a battery module (10), which is a single-piece structure that includes the rectangular battery (1) and the insulating layers (2, 42, 52, 62).

4. The power source apparatus to supply electric power as cited in any one of the claims 1-3 wherein the battery block (3) is a plurality of battery modules (10) stacked together and sandwiched in the stacking direction by endplates (7) at each end, and fastening components (8) connect to the pair of endplates (7) to hold the battery modules (10) in the stack.

5. The power source apparatus to supply electric power as cited in claim 4 wherein the battery modules (10) and endplates (7) have a fit-together structure.

6. The power source apparatus to supply electric power as cited in any one of the claims 1-5 wherein the insulating layers (2, 42, 52, 62) of the battery modules (10) are made thicker in center regions than in periphery regions.

7. The power source apparatus to supply electric power as cited in any one of the claims 1-6 wherein thermally conducting sheet (6) that distorts with compression is disposed between the battery block (3) and the cooling plate (4).

8. The power source apparatus to supply electric power as cited in claim 7 wherein the battery module (10) insulating layer (2, 42, 52, 62) surface opposite the cooling plate (4), which is bottom surface, has an open region (22) that exposes the external case (11), and thermally conducting sheet (6), which is made of electrically insulating material, is disposed in the open regions (22) to join each external case (11) with the cooling plate (4) in a thermally coupled manner via the thermally conducting sheet (6).

9. The power source apparatus to supply electric power as cited in claim 8 wherein battery module (10) insulating layers (2, 42, 52, 62) on the bottom surface (1A) of each external case (11) have cover regions (23) that cover both ends of the bottom surface (1A), the open region (22) is established between those cover regions (23), and interfaces (24) between the cover regions (23) and the open region (22) are inclined in a manner that increases the open area when moving from the bottom surfaces (1A) of the rectangular batteries (1) towards the cooling plate (4).

10. The power source apparatus to supply electric power as cited in any one of the claims 1-9 that is an apparatus to supply power to a motor that drives a vehicle.

11. The power source apparatus to supply electric power as cited in any one of the claims 1-9 that is an apparatus charged by solar cells to store solar cell generated power.

12. A vehicle equipped with the power source apparatus cited in any one of the claims 1-10.
